# EUROPÄISCHE PATENTANMELDUNG

(11) **EP 1 130 535 A2**
(43) Veröffentlichungstag der Anmeldung: **05.09.2001**
(21) Anmeldenummer: 01101465.1
(22) Anmeldetag: 23.01.2001
(51) Int. Cl.: G06K 9/20, A61B 5/117

(54) **Verfahren zum Einsatz eines Fingerabdrucksensors**

(30) Priorität: 28.02.2000 DE 10009348
(71) Anmelder: SIEMENS AKTIENGESELLSCHAFT, 80333 München (DE)
(72) Erfinder: Hierold, Christofer, Dr., 81739 München (DE)

(57) **Zusammenfassung**

Ein auf den Fingerabdrucksensor ausgeübter Auflagedruck oder eine Änderung dieses Auflagedruckes wird mittels definierter Grauwertanteile eines oder mehrerer nacheinander aufgenommener Fingerabdruckbilder festgestellt, und bei Überschreiten und/oder Unterschreiten eines bestimmten Auflagedruckes oder bei Überschreiten eines vorgegebenen Ausmaßes für die Änderung des Auflagedruckes wird ein Steuersignal bzw. Nutzsignal erzeugt oder eine Funktion des Fingerabdrucksensors oder eines daran angeschlossenen elektrischen oder elektronischen Gerätes gesteuert oder geschaltet.

## Beschreibung

Die vorliegende Erfindung betrifft ein Verfahren zum Einsatz eines Fingerabdrucksensors, bei dem das aufgenommene Bild von dem Auflagedruck des Fingers abhängt.

Bei kapazitiv messenden Fingerabdrucksensoren befindet sich an einer Sensorfläche eine rasterförmige Anordnung von Leiterflächen, die die einzelnen Sensorelemente bilden. Die von dem Sensor erzeugte Bildqualität, insbesondere Kontrast und Helligkeit, sind abhängig davon, wie fest eine Fingerkuppe auf die Auflagefläche des Fingerabdrucksensors aufgelegt wird. Wird der Finger nur leicht aufgelegt, so ergibt sich ein Bild mit kleiner Fläche und nur geringen dunklen Grauanteilen. Wird der Finger fest auf den Sensor gedrückt, dann vergrößert sich die Fläche des Fingerabdruckbildes, und die Grauanteile im Bild verschieben sich zu dunkleren Werten hin.

Aufgabe der vorliegenden Erfindung ist es, Möglichkeiten zur Verbesserung des Betriebes oder Einsatzes eines Fingerabdrucksensors aufzuzeigen.

Diese Aufgabe wird mit dem Verfahren mit den Merkmalen des Anspruches 1 gelöst. Ausgestaltungen ergeben sich aus den abhängigen Ansprüchen.

Bei dem erfindungsgemäßen Verfahren wird die Auswirkung eines auf die Auflagefläche des Fingerabdrucksensors ausgeübten Auflagedruckes oder einer Änderung dieses Auflagedruckes auf das erzeugte Bild festgestellt. Dazu wird die von dem aufgenommenen Fingerabdruckbild eingenommene Fläche bestimmt, oder es wird die Anzahl und/oder Verteilung von Bildpunkten, in denen definierte und ggf. geeignet normierte Grauwerte vorhanden sind, oder deren Änderung in mehreren nacheinander aufgenommenen Fingerabdruckbildern bestimmt. Daraus kann auf den Auflagedruck der Fingerkuppe oder dessen Änderung rückgeschlossen werden. Bei Überschreiten und/oder Unterschreiten eines vorgegebenen Grenzwertes für die Anzahl und/oder Verteilung von Bildpunkten, die für das aufgenommene Fingerabdruckbild relevant sind (in dem Sinn, dass diese Bildpunkte nicht einer rein weißen oder schwarzen und daher bedeutungslosen Teilfläche des Bildes angehören) oder einen definierten Grauwert besitzen, oder bei Überschreiten eines vorgegebenen Grenzwertes für die Änderung des Grauwertanteiles in mehreren nacheinander aufgenommenen Fingerabdruckbildern wird ein Steuersignal bzw. Nutzsignal erzeugt oder eine Funktion des Fingerabdrucksensors oder eines angeschlossenen Gerätes gesteuert oder geschaltet. Mit dem erfindungsgemäßen Verfahren kann so durch den Vorgang des Auflegens einer Fingerkuppe auf den Sensor mindestens eine zusätzliche Funktion gesteuert werden, was andernfalls nicht möglich ist, wenn nur das Fingerabdruckbild als solches aufgenommen wird.

Zum Beispiel kann der Fingerabdrucksensor in einem Bereitschaftsbetriebszustand betrieben werden (Stand-by), der den Stromverbrauch minimiert. Bei einer Erhöhung des Auflagedrukkes auf der Auflagefläche ändert sich die Größe des Bildes, und der Grauwertanteil steigt, so dass der Fingerabdrucksensor aus dem Bereitschaftsbetriebszustand eingeschaltet wird und Fingerabdruckbilder mit der gewünschten Auflösung liefert; bei einer nachfolgenden Erniedrigung des Auflagedruckes wird der Fingerabdrucksensor wieder in den Bereitschaftsbetriebszustand abgeschaltet. In diesem Bereitschaftsbetriebszustand wird beispielsweise nur eine bestimmte geringe Anzahl an Einzelsensorelementen angesteuert, so dass deren Grauwertanteile ermittelt werden können. Diese ausgewählte Anzahl von Bildpunkten kann über die Gesamtfläche der Auflagefläche des Sensors in vorgegebener Weise verteilt sein oder auch auf die Mitte der Sensorfläche konzentriert sein. Die Ansteuerung des Sensors ist in diesem Bereitschaftsbetriebszustand erheblich vereinfacht; und die Auswertung der ermittelten Signale kann auf die Ermittlung von Grauwertanteilen in einer relativ groben Abstufung beschränkt werden.

Eine weitere Möglichkeit, die das Verfahren eröffnet, besteht darin, ein weiteres elektrisches oder elektronisches Gerät oder eine Vorrichtung in Abhängigkeit von dem festgestellten Auflagedruck einzuschalten. Es kann sich dabei zum Beispiel um eine Anzeigevorrichtung handeln, die wegen des hohen Stromverbrauchs oder Verschleißes nur eingeschaltet sein soll, wenn der Fingerabdrucksensor genutzt wird, deren Einschalten aber nicht an die Personenidentifizierung gekoppelt sein muss. Solche Zusatzfunktionen, die mit der Aufnahme des Fingerabdruckbildes nicht direkt zusammenhängen, können mit dem erfindungsgemäßen Verfahren geschaltet werden, ohne dass ein umfangreicher zusätzlicher technischer Aufwand dafür erforderlich wäre.

Mit dem Verfahren läßt sich auch eine dynamische, nutzerabhängige Bewertung des Vorgangs zur Aufnahme von Bildern des Fingerabdruckes erreichen. Wird das Sensorbild schnell genug erzeugt, typisch zum Beispiel etwa zehn Bilder pro Sekunde, dann lässt sich die dynamische Veränderung des Fingerabdruckbildes infolge einer Änderung des Auflagedruckes dazu verwenden, um lebende Finger von Fälschungsversuchen zu unterscheiden (Lebenderkennung). Eine weitere Möglichkeit besteht darin, in sicherheitsrelevanten Anwendungen über die Erfassung des - möglicherweise stark erhöhten - Auflagedrucks festzustellen, ob die den Fingerabdruck nutzende Person bedroht ist, und entsprechende Maßnahmen mittels elektronisch übermittelter Signale einzuleiten. Der Fingerabdrucksensor kann so über eine Schutzfunktion verfügen, die darin besteht, dass ein normales Auflegen der Fingerkuppe zur üblichen Betriebsweise des Sensors führt, ein sehr festes Aufdrücken aber einen Notfallalarm oder dergleichen auslöst.

## Patentansprüche

1. Verfahren, bei dem mit einem Fingerabdrucksensor ein Fingerabdruckbild aufgenommen wird, das sich mit einer Änderung eines auf eine Auflagefläche des Fingerabdrucksensors ausgeübten Auflagedruckes ändert,
**dadurch gekennzeichnet, dass**
eine Anzahl und/oder Verteilung von Bildpunkten bestimmt wird, die in einem relevanten Anteil des Fingerabdruckbildes liegen oder in denen vorgegebene Grauwerte vorhanden sind, oder deren Änderung in nacheinander aufgenommenen Fingerabdruckbildern bestimmt wird und
bei Überschreiten und/oder Unterschreiten eines vorgegebenen Grenzwertes für diese Anzahl bzw. Verteilung oder bei Überschreiten eines vorgegebenen Grenzwertes für deren Änderung ein Steuersignal bzw. Nutzsignal erzeugt oder eine Funktion des Fingerabdrucksensors oder eines daran angeschlossenen elektrischen oder elektronischen Gerätes gesteuert oder geschaltet wird.

2. Verfahren nach Anspruch 1, bei dem die Funktion des Fingerabdrucksensors aus einem Bereitschaftsbetriebszustand (stand-by) in einen Betriebszustand voller Funktionsfähigkeit geschaltet oder in den Bereitschaftsbetriebszustand abgeschaltet wird.

3. Verfahren nach Anspruch 1, bei dem anhand der Änderung der besagten Anzahl bzw. Verteilung eine Lebenderkennung erfolgt, anhand derer entschieden wird, ob eine Funktion des Fingerabdrucksensors oder eines daran angeschlossenen elektrischen oder elektronischen Gerätes gesteuert oder geschaltet wird.

4. Verfahren nach Anspruch 1, bei dem ein Steuersignal bzw. Nutzsignal erzeugt wird, das den Auflagedruck repräsentiert und bei Überschreiten eines vorgegebenen Grenzwertes für den Auflagedruck eine Schutzfunktion auslöst.
